# EUROPEAN PATENT APPLICATION

(11) **EP 1 995 122 A2**
(43) Date of publication of application: **26.11.2008**
(21) Application number: 08155632.6
(22) Date of filing: 05.05.2008
(51) Int. Cl.: B60R 16/03

(54) **Engine starting apparatus**

(30) Priority: 17.05.2007 JP 2007131263
(71) Applicant: Omron Corporation, Kyoto-shi, Kyoto 600-8530 (JP)
(72) Inventor: Ikushima, Yoshihiro,c/o OMRON CORPORATION, Shiokoji-dori,Shimogyo-ku,Kyoto-shi KYOTO Kyoto 600-8530 (JP); Johzaki, Tsutomu,c/o OMRON CORPORATION, Shiokoji-dori,Shimogyo-ku,Kyoto-shi KYOTO Kyoto 600-8530 (JP)
(74) Representative: Brykman, Georges

(57) **Abstract**

Control over vehicle power supply, engine starting control, and control over locking/unlocking of a steering are to be reliably exercised at a reduced cost. Even when there is a breakage in a ground line of a power supply ECU, a ground line for the power supply ECU is formed by a path including a diode and a start switch or a path including a diode and a transistor of an engine 3 to start the engine. Even when a power supply ECU runs away for some reason, another end of a NAND circuit is connected to ground through a path formed by a diode and the transistor or a path formed by a diode and a transistor to interrupt the supply of power to a steering lock ECU.

## Description

### BACKGROUND OF THE INVENTION

### 1. Field of the Invention

The present invention relates to an engine starting apparatus for controlling start and stop of an engine and a power supply of a vehicle through switch operations.

### 2. Description of Related Art

Engine starting apparatus controlling start and stop of an engine and a power supply of a vehicle through switch operations for improved anti-theft performance and convenience of vehicles and the like are known to eliminate mechanical keys having low anti-theft performance and inconvenience of inserting a key into a cylinder and turning the key therein (for example, see Japanese Patent No. 3851803 (Patent Document 1)).

Known techniques for improving anti-theft performance of vehicles as described above include the use of encrypted communication between an electronic key, an immobilizer, an electric steering lock device, and an engine device to increase the number of routes of authentication. The management of each route of authentication, power supply control, and engine start/stop control are provided by one ECU (Electronic Control Unit: power supply ECU). Locking and unlocking of a steering is controlled by two CPUs in order to prevent erroneous operations of the electric steering lock device.

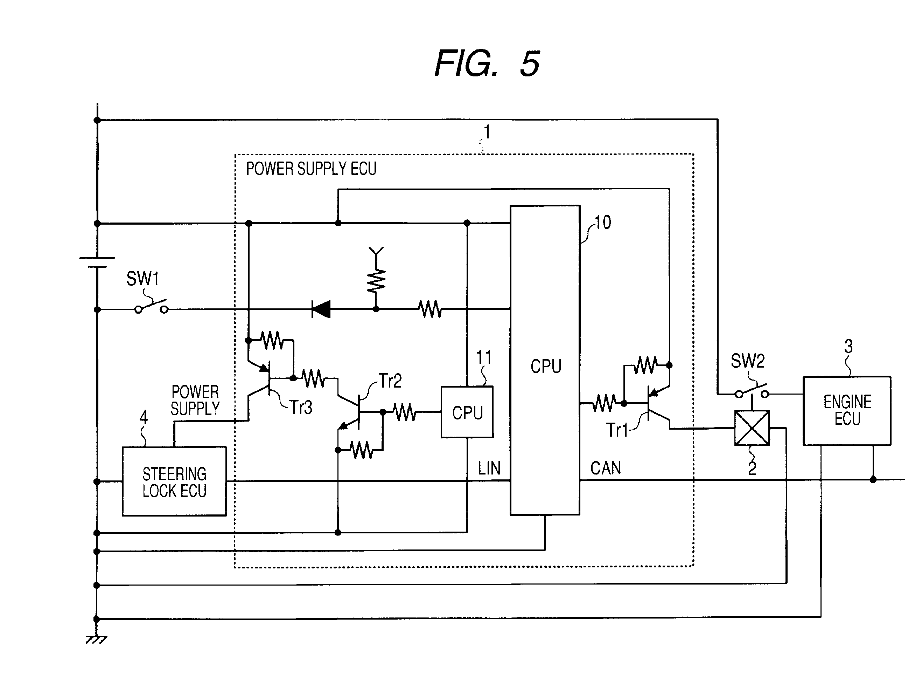

Fig. 5 is a circuit diagram showing a configuration of an engine starting apparatus according to the related art. In the figure, a CPU 10 of a power supply ECU 1 detects on and off states of a start switch SW1. Specifically, when the CPU 10 detects that the start switch SW1 is turned on, it turns a transistor Tr1 on. When the transistor Tr1 is turned on, a power supply relay 2 for an engine ECU is excited to turn a relay switch SW2 on, whereby power is supplied to an engine ECU 3.

When the CPU 10 detects that the start switch SW1 is turned off, it turns the transistor Tr1 off. When the transistor Tr1 is turned off, the power supply relay 2 for the engine ECU is deexcited to turn the relay switch SW2 off, whereby the supply of power to the engine ECU 3 is interrupted. The engine ECU 3 starts an engine when power is supplied and stops the engine when the supply of power is interrupted.

A CPU 11 of the power supply ECU 1 is responsible for on/off control of transistors Tr2 and Tr3. When the transistors Tr2 and Tr3 are in the on-state, power is supplied to the steering lock ECU 4. The steering lock ECU 4 unlocks the steering when the engine ECU 3 is operating and locks the steering when the engine ECU 3 is not operating (engine is stopped).

However, the engine starting apparatus of the related art has a problem in that a breakage of the ground line from the power supply ECU 1 disables the power supply ECU 1 to disable the power supply control of the vehicle and the starting of the engine consequently. When the power supply ECU 1 runs away for some reason, a problem arises in that the electric steering can be locked when the vehicle is traveling or unlocked when the vehicle is parked. The use of the two CPUs 10 and 11 results in another problem in that the cost of the power supply ECU 1 is increased. In the present specification, the term "ground line" means a path extending from a predetermined CPU or ECU to the ground. For example, "a ground line from the power supply ECU 1" means a path extending from the power supply ECU 1 to the ground.

### SUMMARY OF THE INVENTION

Under the circumstance, it is an object of the invention to provide an engine starting apparatus which is inexpensive and which is capable of reliably exercising power supply control of a vehicle, engine starting control, and control of locking and unlocking of a steering.

An engine starting apparatus according to the invention is an engine starting apparatus for starting an engine of a vehicle including engine control means which controls start and stop of the engine and power supply control means which has a plurality of ground lines and which controls the supply of power to the engine control means; and at least one of the plurality of ground lines is a path which reaches the ground via a predetermined member located outside the power supply control means.

Preferably, the apparatus further includes start switch means which gives an instruction for starting the engine or starting power supply control, and the predetermined member is the start switch means.

Preferably, the predetermined member is the engine control means.

For example, the predetermined member located outside the power supply control means may be a diode, a transistor or the like accompanying control means other than the power supply control means or a switch, a relay, a resistor or the like located outside the power supply control means. More specifically, examples of the predetermined member include a diode, a transistor or the like accompanying the engine control means and a switch or the like used as the start switch means.

An engine starting apparatus according to the invention is an engine starting apparatus for starting an engine of a vehicle including engine control means which controls start and stop of the engine, steering lock control means which controls locking and unlocking of a steering of the vehicle, and power supply control means which controls the supply of power to the engine control means and the steering lock control means; the power supply control means includes at least power supply switching means which turns on or off the supply of power to the steering lock control means; there is at least a first ground line extending from the power supply switching means to the ground via the engine control means; and the power supply switching means keeps the supply of power to the steering lock control means off while a current is flowing via the first ground line.

Preferably, the apparatus further includes monitoring means which monitors the state of the vehicle; there is a second ground line extending from the power supply switching means to the ground via the monitoring means; the monitoring means exercises control to pass a current through the second ground line when it determines that the vehicle is in a particular state; and the power supply switching means keeps the supply of power to the steering lock control means off while a current is flowing through the second ground line.

The particular state may be arbitrarily defined, and it may be, for example, a state in which doors of the vehicle are locked.

According to the invention, at least one of the plurality of ground lines of the power supply control means for controlling the supply of power to the engine control means is a path extending to the ground via a predetermined member located outside the power supply control means. As a result, even when there is a line breakage at a path extending from the power supply control means to the ground without passing through any other member, since the path extending to the ground via the predetermined member is still available, control of power supply and engine starting can be exercised.

When the predetermined member is the start switch member which gives an instruction for starting the engine or starting power supply control, even when there is a line breakage at a path extending from the power supply control means to the ground without passing through any other member, the path extending from the power supply control means to the ground via the start switch means is still available while the start switch means is operated to keep an on-state. Thus, control of power supply and engine starting can be exercised.

When the predetermined member is the engine control means, even when there is a line breakage at a path extending from the power supply control means to the ground without passing through any other member, the path extending from the power supply control means to the ground via the engine control means is still available while power is supplied to the engine control means. Thus, control of power supply and engine starting can be exercised.

According to the invention, in the engine starting apparatus having the engine control means, steering lock control means, and the power supply control means for controlling the supply of power to the engine control means and the steering lock control means, the power supply control means includes at least power supply switching means for turning on or off the supply of power to the steering lock control means, and there is at least a first ground line constituting a path extending from the power supply switching means to the ground via the engine control means. At this time, even if the power supply control means runs away, the supply of power to the steering lock control means is kept off by the power supply switching means while power is supplied to the engine control means. It is therefore possible to avoid such a situation that the steering is changed from an unlocked state to a locked state during a travel.

When there is a second ground line constituting a path extending from the power supply switching means to the ground via the monitoring means, even if the power supply control means runs away, the supply of power to the steering lock control means is kept off by the power supply switching means while the monitoring means exercises control to pass a current through the second ground line. Therefore, when the monitoring means exercises the control to pass a current through the second ground line in a door locked state, it is possible to avoid a situation such that the steering is changed from a locked state to an unlocked state when the vehicle is parked with the doors locked.

### BRIEF DESCRIPTION OF THE DRAWINGS

Fig. 1 is a circuit diagram showing a configuration of an engine starting apparatus in a mode for carrying out the invention.
Fig. 2 is a circuit diagram for explaining operations performed when there is a breakage in a ground line of a power supply ECU 100 in the mode for carrying out the invention.
Fig. 3 is a sequence diagram for explaining the operations performed when there is a breakage in the ground line of the power supply ECU 100.
Fig. 4 is a circuit diagram for explaining an operation of preventing malfunction of a steering lock ECU 4 in the mode for carrying out the invention.
Fig. 5 is a circuit diagram showing a configuration of a control circuit according to the related art.

### DESCRIPTION OF PREFERRED EMBODIMENTS

Embodiments of the invention will now be described based on the drawings.

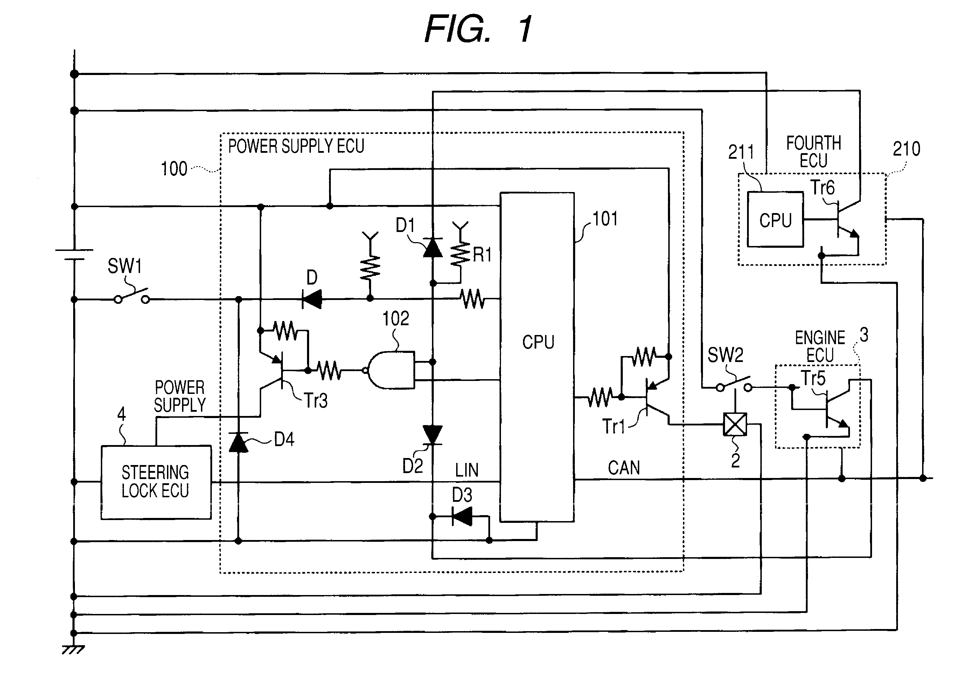

Fig. 1 is a circuit diagram showing a configuration of an engine starting apparatus in the present mode. Parts corresponding to those shown in Fig. 5 are indicated by like reference numerals and will not be described. In the figure, the output of a NAND circuit 102 is turned on/off (low active) according to the logical product of the output of a CPU 101 supplied to one input end thereof and a collector voltage of a transistor Tr6 of a fourth ECU 210 connected through a diode D1 supplied to another input end thereof or a collector voltage of a transistor Tr5 of an engine ECU 3 connected through a diode D2.

That is, when the engine is in a starting state, the output of the NAND circuit 102 is a low level if the output of the CPU 101 is a low level (active) and the transistor Tr6 of the fourth ECU 210 or the transistor Tr5 of the engine ECU 3 is in an on-state.

The transistor Tr3 is in the on-state when the output of the NAND circuit 102 is the low level and is in an off-state when the output of the NAND circuit 102 is a high level. That is, when the output of the NAND circuit 102 becomes the low level, the transistor Tr3 is turned on to supply power to a steering lock ECU 4. When the output of the NAND circuit 102 becomes the high level, the transistor Tr3 is turned off to interrupt the supply of power to the steering lock ECU 4.

In other words, in a state in which power is supplied to the engine ECU 3, since the transistor Tr5 of the engine ECU 3 is in the on-state, the other input end of the NAND circuit 102 is connected to ground GND through the diode D2 and the transistor Tr5. As a result, the output of the NAND circuit 102 becomes the high level, and the transistor Tr3 is turned off to interrupt the supply of power to the steering lock ECU 4.

Timing for controlling a steering lock function will now be briefly described. The steering of the vehicle is locked when an operation of a door of the vehicle is detected while the vehicle is parked (engine is stopped) with the steering in the unlocked state. The steering is unlocked when it is recognized that the power supply of the vehicle is being turned on (ACC/IG (ignition) /ENG ON (engine on) by a right user. Under conditions other than that described above, the supply of power to the steering lock ECU 4 is kept off.

The fourth ECU 210 includes a CPU 211 and the transistor Tr6. The CPU 210 determines the state of the vehicle (whether it has being started or stopped) to exercise control so as to turn the transistor Tr6 on or off. The transistor Tr6 is turned on when it is determined by the CPU 211 that the engine is being started, and the transistor Tr6 is turned off when the engine is stopped.

Specifically, when the engine is being started, since the transistor Tr6 of the fourth ECU 210 is turned on, the other input end of the NAND circuit 102 is connected to the ground through the diode D1 and the transistor Tr6. As a result, the output of the NAND circuit 102 becomes the high level to turn the transistor Tr3 off, whereby the power supply to the steering lock ECU 4 is interrupted.

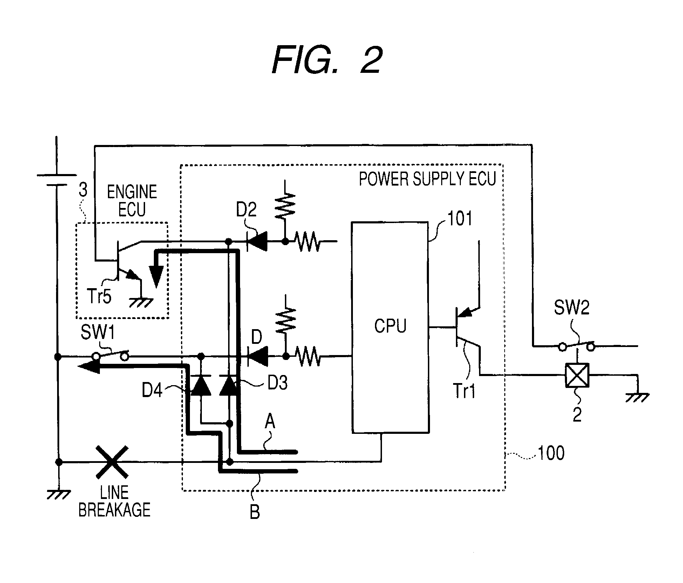

The CPU 101 has ground lines other than a ground line which extends from the CPU 101 to the ground without passing through any other member. Specifically, there is a path extending from the CPU 101 to the ground through a diode D3 and the transistor Tr5 in the engine ECU 3 (the path corresponding to a "path A" shown in Fig. 2 which will be described later) and a path extending from the CPU 101 to the ground through a diode D4 and a start switch SW1 (the path corresponding to a "path B" shown in Fig. 2 which will be described later) . The presence of those paths allow a ground line from the CPU 101 to be maintained to execute power supply control and the like properly even if there is a line breakage somewhere in the path extending from the CPU 101 to the ground without passing through any other member.

Operations of the engine starting apparatus in the present mode for carrying out the invention will now be described.

Fig. 2 is a circuit diagram for explaining operations in the present mode for carrying out the invention performed when there is a line breakage in one location in the path extending from the CPU 101 to the ground without passing through any other member. Let us assume that the start switch SW1 is operated and turned on when there is a line breakage in the region shown as having "line breakage" in Fig. 2. Then, a ground line is formed by the path B extending from the CPU 101 to the ground through the diode D4 and the start switch SW1. Thus, power is supplied to the engine ECU 3 to start the engine.

When the engine is started (exactly speaking, at least until power is supplied to the engine ECU 3), the path B is broken by turning the start switch SW1 off. At this point in time, however, since power has already been supplied to the engine ECU 3, a ground line is formed by the path A extending from the CPU 101 to the ground through the diode D3 and the transistor Tr5 in the engine ECU 3. Therefore, even when there is a line breakage as described above, the power supply can be controlled, and the engine can be started.

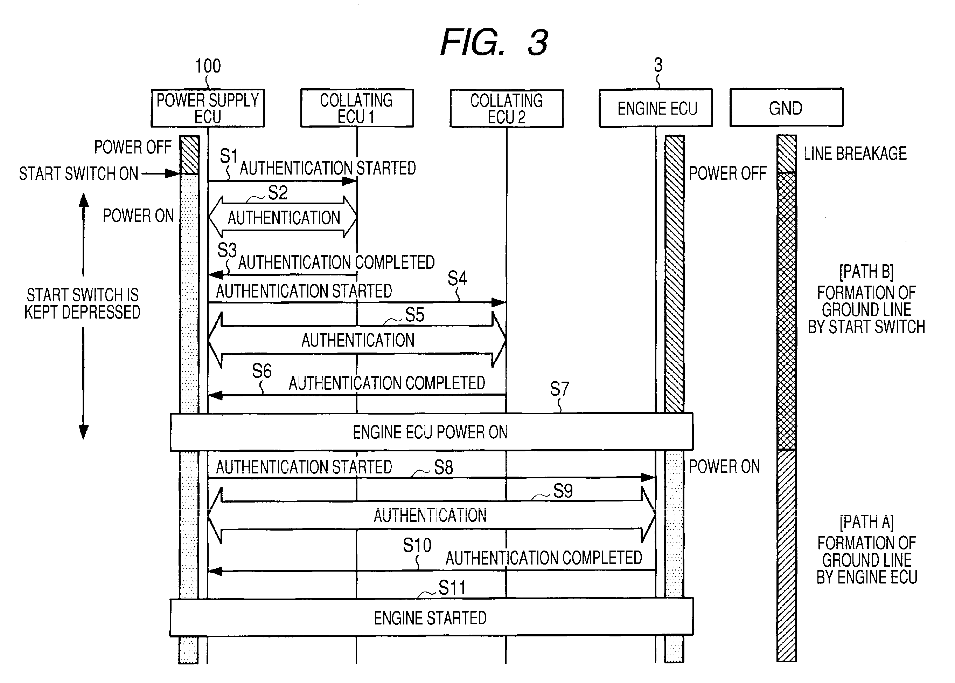

Fig. 3 shows a sequence for explaining operations performed when there is a line breakage as described above. First, in the case of a line breakage in one location of the path extending from the CPU 101 in the power supply ECU 100 to the ground without passing through any other member, there is no effective ground line of the CPU 101 ("line breakage" is shown in the column of GND in Fig. 3) before the start switch SW1 is operated or when the power supply is off. When the start switch SW1 is operated and turned on, a ground line is formed by the path B ("path B" is shown in the column of GND), and power is therefore supplied to the power supply ECU 100.

The power supply ECU 100 starts authentication against a collating ECU 1 (not shown) (step S1), and authentication is carried out between the power supply ECU 100 and the collating ECU 1 (step S2). When the completion of authentication is advised by the collating ECU 1 (step S3), the power supply ECU 100 starts authentication against a collating ECU 2 (not shown) (step S4), and authentication is carried out between the power supply ECU 100 and the collating ECU 2 (step S5). When the completion of authentication is advised by the collating ECU 2 (step S6), the power supply ECU 100 supplies power to the engine ECU 3 (step S7).

When the start switch SW1 is turned off in this state, the path B is broken. However, since power is supplied to the engine ECU 3 at this point in time, a ground line is formed by the path A ("path A" is shown in the column of GND).

The power supply ECU 100 starts authentication against the engine ECU 3 (step S8), and authentication is carried out between the power supply ECU 100 and the engine ECU 3 (step S9) . When the completion of authentication is advised by the engine ECU 3 (step S10), the engine ECU 3 starts the engine (step S11).

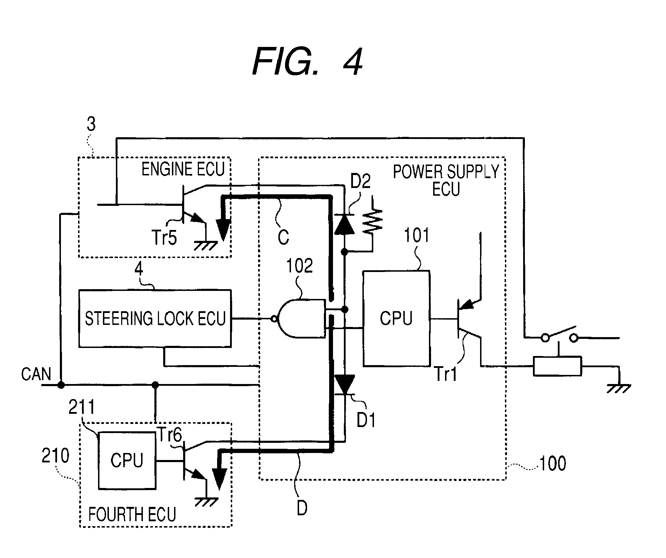

Fig. 4 is a circuit diagram for explaining an operation of preventing malfunction of a steering lock device in the present mode for carrying out the invention. Referring to the figure, when the start switch SW1 is pressed, power is supplied to the engine ECU 3 to start the engine. Even if the power supply ECU 1 runs away for some reason in this state, since power is supplied to the engine ECU 3, the transistor Tr5 is turned on, and the other input end of the NAND circuit 102 is connected to the ground through a path C formed by the diode D2 and the transistor Tr5 of the engine ECU 3.

Alternatively, the fourth ECU 210 determines the state of the vehicle and turns the transistor Tr6 on, whereby the other input end of the NAND circuit 102 is connected to the ground through a path D formed by the diode D1 and the transistor Tr6 of the fourth ECU 210.

Therefore, even if the power supply ECU 100 runs away for some reason, since the other input end of the NAND circuit 102 is connected to the ground, the output of the NAND circuit 102 is at the high level, which allows the supply of power to the steering lock ECU 4 to be reliably interrupted.

In the above-described mode for carrying out the invention, a path extending from the CPU 101 in the power supply ECU 100 to the ground through a predetermined member located outside the CPU 101 is maintained. Therefore, the supply of power can be controlled and the engine can be started even when there is a line breakage in the path extending from the CPU 101 to the ground without passing through any other member.

While power is supplied to the engine ECU 3, the supply of power to the steering lock ECU 4 is reliably interrupted, which makes it possible to avoid locking of the steering during a travel.

The state of the vehicle is monitored by the fourth ECU 210, and power to the steering lock ECU 4 is reliably interrupted while the doors of the vehicle are locked by a door locking operation carried out by a right user.

Since the implementation of the above-described measures eliminates the need for employing the control method involving two CPUs, a reduction in the cost of ECUs can be achieved through a reduction in the number of CPUs.

In the above-described mode for carrying out the invention, when power is supplied to the power supply ECU 100 with the start switch SW1 operated, it may be determined that there is a breakage in the ground line of the power supply ECU 100, and the information may be stored in a flash ROM. The information on a line breakage may be also advised using a communication line.

## Claims

1. An engine starting apparatus for starting an engine of a vehicle, comprising:
engine control means which controls start and stop of the engine and
power supply control means which has a plurality of ground lines and which controls the supply of power to the engine control means,
wherein at least one of the plurality of ground lines is a path which reaches the ground via a predetermined member located outside the power supply control means.

2. An engine starting apparatus according to Claim 1, further comprising start switch means which gives an instruction for starting the engine or starting power supply control,
wherein the predetermined member is the start switch means.

3. An engine starting apparatus according to Claim 1 wherein the predetermined member is the engine control means.

4. An engine starting apparatus for starting an engine of a vehicle, comprising:
engine control means which controls start and stop of the engine;
steering lock control means which controls locking and unlocking of a steering of the vehicle; and
power supply control means which controls the supply of power to the engine control means and the steering lock control means,
wherein the power supply control means includes at least power supply switching means which turns on or off the supply of power to the steering lock control means;
there is at least a first ground line extending from the power supply switching means to the ground via the engine control means; and
the power supply switching means keeps the supply of power to the steering lock control means off while a current is flowing via the first ground line.

5. An engine starting apparatus according to Claim 4, further comprising monitoring means which monitors the state of the vehicle;
wherein there is a second ground line extending from the power supply switching means to the ground via the monitoring means;
the monitoring means exercises control to pass a current via the second ground line when it determines that the vehicle is in a particular state; and
the power supply switching means keeps the supply of power to the steering lock control means off while a current is flowing via the second ground line.
